# EUROPEAN PATENT SPECIFICATION

(11) **EP 1 916 630 B1**
(45) Date of publication and mention of the grant of the patent: **29.09.2010**
(21) Application number: 06425733.0
(22) Date of filing: 24.10.2006
(51) Int. Cl.: G07C 9/00, B65F 1/00

(54) **A method for managing containers of confidential data intended to be destroyed and devices for actuating such method**
Verfahren zur Verwaltung von Behältern vertraulicher, zu vernichtender Daten und Vorrichtungen zur Ausführung eines solches Verfahrens
Méthode pour gérer des conteneurs de données confidentielles destinées à être détruites et appareils pour mettre en oeuvre la méthode

(43) Date of publication of application: 30.04.2008
(73) Proprietor: CONF Plastic S.r.l., 25039 Travagliato (Brescia) (IT)
(72) Inventor: Ventura, Antonio, 25039 Travagliato (Brescia) (IT)
(74) Representative: Crippa, Paolo Ernesto

(56) References cited:
- EP-A- 0 388 997
- EP-A- 1 450 312
- WO-A-02/40381
- WO-A-03/106293
- US-A1- 2003 179 073

## Description

The present invention relates to a method for managing containers of confidential data intended to be destroyed and to devices that allow actuating such method.

Data destruction, or deletion, is subject to privacy law no. 675 of 31.12.96. The need of guaranteeing the confidentiality of personal information has brought to the establishment of businesses (hereinafter called "disposal firms") specialising in the destruction of such data. These firms offer a service of collection, transport, storage of media, not just paper, for any type of confidential and personal documents, up to the destruction and recycling centre. In the practice, the latter is the "final station" of all bank, industrial, assurance secrets, and so on.

At present, disposal firms provide their clients with containers, for example of aluminium alloy, with locked lid, with different capacities (for example, 70 to 600 litres), to use as document folders.

Each container is provided with a lock, integrated in the lid, with coded cylinder that directly acts on the spring latch. The coding may be the same for the containers intended for a certain client, or is may differ for each container.

EP 1450312 discloses a method for managing locks provided with such coding. Furthermore WO 02/40381 discloses the management of waste collection by means of containers provided with IDtags.

Usually, the containers are manufactured by a manufacturing firm and are delivered to the disposal firms that manage the collecting service at their clients'. Empty containers are loaded in lorries and carried by a disposal firm to its clients; here, the service managers open the containers, using the keys hung externally to the various containers and corresponding to the cylinders mounted thereon, for checking that they are completely empty, after which they put the key into the container and close the lid. The optional opening of the container by the user, for any reason, may be carried out with a master key provided beforehand by the disposal firm.

As the containers are filled with documents to be destroyed, the end user's manager calls the disposal firm to change the containers so that full containers are replaced with as many empty containers.

Full containers are then collected and carried by the disposal firm to their premises, by vans, provided with oil-pressure loading/unloading tailboard; afterwards, they are manually opened with the master key, and then emptied, by an electro-mechanical tipper, into a grinding machine to destroy the contents.

After a visual check, the inside key is removed and arranged outside, the lid is closed and the containers are stored for a new use.

During these journeys and steps, transport and check documents are filled, which will then be used for billing counts.

Recently, some disposal firms have introduced a barcode system for recognising incoming and outgoing containers (directly carried out by the driver upon delivery).

The object of the present invention is to propose a method for managing containers of confidential data to be destroyed which should allow obtaining a more qualified, safe, rational and quick management of such containers while offering additional services and options.

Such object is achieved with a management method according to claim 1.

The features and advantages of the management method according to the invention will appear more clearly from the following description of preferred embodiments thereof, made by way of a non-limiting example with reference to the annexed figures, wherein:

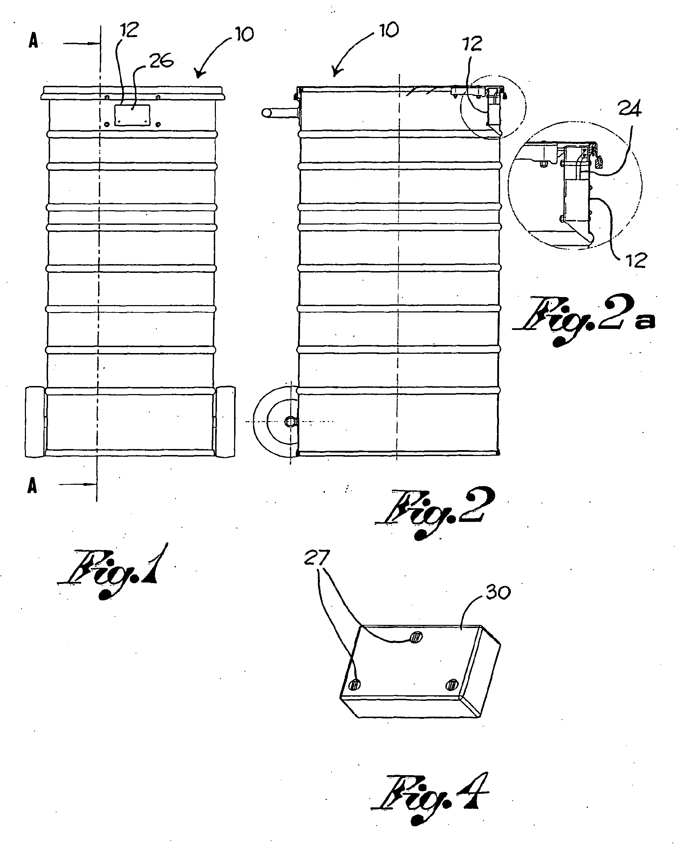

Figure 1 shows a front view of a container for confidential documents to be destroyed according to the invention;

Figure 2 shows a longitudinal section of the container along line A-A in figure 1;

Figure 2a shows an enlarged view of the electronic lock of the container of figure 2;

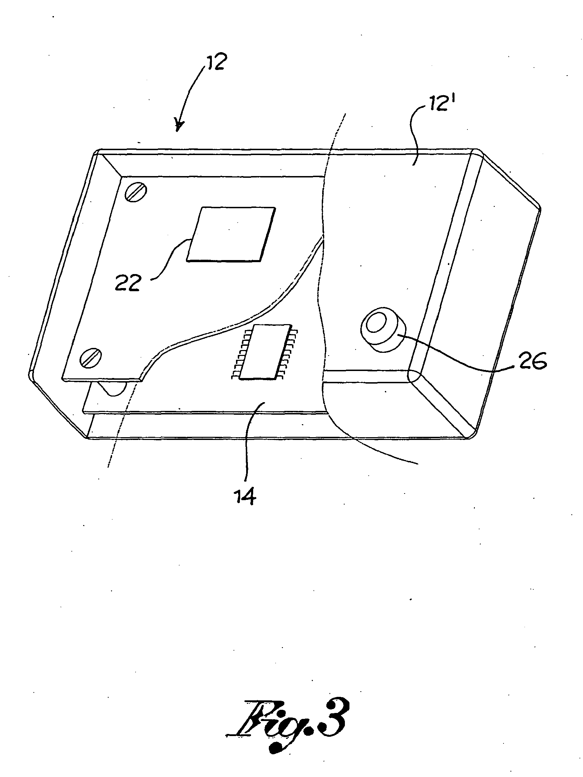

Figure 3 schematically shows a cutaway view of the lock only;

Figure 4 shows a perspective view of an electronic key associable to the lock of figure 3;

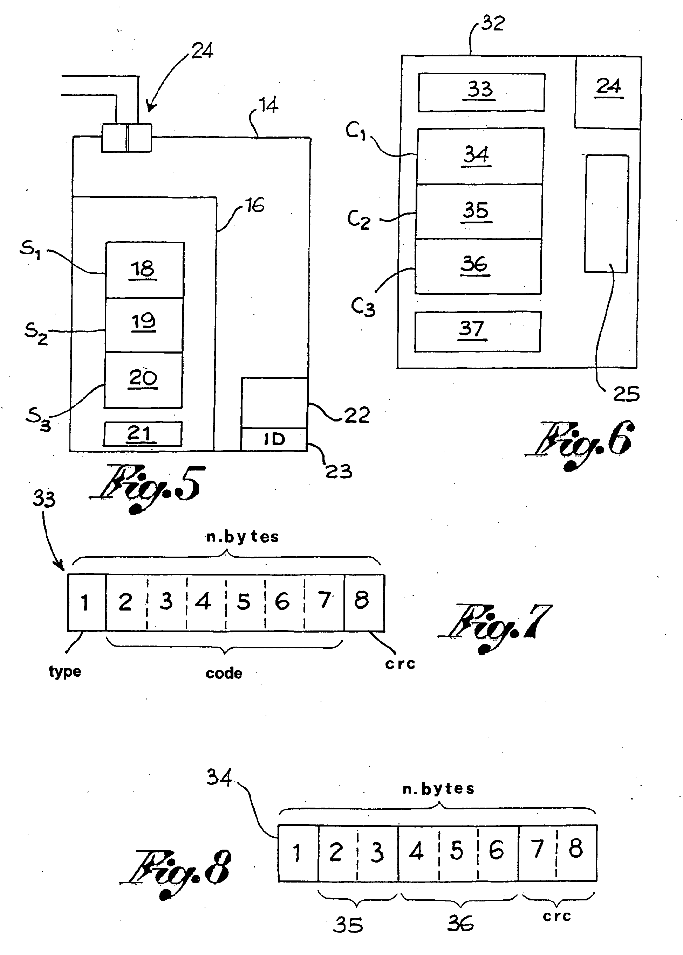

Figure 5 schematically shows the electronic board of an electronic lock;

Figure 6 schematically shows the electronic board of an electronic key;

Figure 7 shows a string of bytes associated to the serial number of the electronic key;

Figure 8 shows a string of bytes used for the opening codes of the electronic key;

Figures 9a, 9b, 9c and 9d show portions of an example of a software code that implements a lock configuration and opening algorithm;

Figure 10 shows a side view of the container connected to a tilting device;

Figure 11 shows an enlarged view of the circled detail in figure 10;

Figure 12 shows an electronic key mounted on the tilting device of figures 10 and 11; and

Figure 13 shows the container moved by the tilting device in a position for emptying the contents thereof.

The container management method and the relevant devices shall be described for a typical situation that involves three subjects or operators in the management of the containers: the manufacturer A of the containers, at least one disposal firm B, that receives the containers from the manufacturer and carries out the destruction of the confidential documents, and at least one client C of the disposal firm, or end user, that is, the subject that has the confidential documents to be placed in the containers for the destruction thereof at the disposal firm's. The management method described could in any case be extended to any number of subjects of a hierarchical relation of the supplier-client type, by configuring the physical devices that allow actuating such method accordingly.

The hardware and software devices that allow managing the containers according to the present invention shall now be described.

Reference numeral 10 denotes a container suitable for collecting confidential documents to be destroyed. Container 10 is provided with an electronic lock 12 which can be associated to an electronic key 30 for the opening thereof. Lock 12 comprises an electronic microprocessor board 14 with permanent memory 16 for storing three opening codes to which three respective levels are assigned, corresponding, as clarified hereinafter, to three different accessibility levels:

Manufacturer code 18 (first level)

Disposal firm code 19 (second level)

User code 20 (third level).

Memory 16 further stores a secret code 21, whose function shall be explained in the following description.

In accordance with a preferred embodiment, lock 12 further comprises a read-only RFID transponder 22 with unique identification code 23.

Lock 12 is provided with an electrical supply terminal 24 connectable to the external mains. In addition, or as an alternative, lock 12 is provided, on a side 12' of the enclosure thereof accessible from the outside, with electrical contacts 26 suitable for taking the electrical supply from corresponding electrical contacts 27 provided on the outer enclosure of the key and connected to a battery 25 internal thereto. Advantageously, also the exchange of information between key and lock occurs through such contacts 26, 27.

Lock 12 is associated to a set of electronic keys 30, one for each subject involved in the container management, as described hereinafter.

Each key 30 comprises a permanent electronic memory 32 which can be written only after having carried out an authentication procedure (for example according to a challenge-response protocol), which shall be better described hereinafter.

Memory 32 of key 30 contains the following information: a serial number 33, three opening codes 34-36, and a secrete code 37.

Each key 30 has its own serial number 33 that cannot be changed. The memory portion relating to the code of serial number 33 can be read but not rewritten, so that nobody may generate keys with the same serial number. In accordance with an embodiment, serial number 33 is comprised of 8 bytes (1=type, 6=code, 1=crc (cyclic redundancy check)), which therefore allows about 256,000 billion combinations.

This code prevents the key duplication and allows the unique association of the key to an owner. The "crc" allows checking that the code is not altered during the reading.

The opening codes 34-36 are readable and writable and, as like the lock, are divided into three different levels corresponding to three different access levels: manufacturer code 34 (first level), disposal firm code 35 (second level) and user code 36 (third level). In accordance with an embodiment, the opening codes occupy 8 bytes of memory: 1 byte for the manufacturer code 34, 2 bytes for the disposal firm code 35, 3 bytes for the user code 36, and the remaining 2 bytes are reserved for the crc.

The possible combinations for the manufacturer code therefore are 256; the possible combinations for the disposal firm code are 65536 (that is, the maximum number of clients of a same manufacturer); the possible combinations for the user code are about 16,000,000 (that is, the maximum number of all the possible clients of a disposal firm (each disposal firm can manage 16 million clients).

The crc ensures that the code is not altered during the reading.

Writing the opening codes requires knowing the secret code 37 stored in the key. Therefore, once written, the opening codes are always readable and after the key configuration are not altered anymore.

The secret code 37 is unique for all the keys of a manufacturer A and is written during the key creation step. Afterwards, it is not readable anymore. According to an embodiment, the secret code 37 is comprised of 8 bytes.

Manufacturer A, disposal firm B and end users C have a key 30 which, in case of matching between its opening codes 34-36 and the opening codes 18-20 of lock 12, opens containers 10.

However, according to the management method of the invention, even though keys 30 are physically substantially all the same, they are configured in a different way according to the owner thereof. More in detail, the keys of manufacturer A, in the following description also called first level keys, are configured for opening any container manufactured by the manufacturer and therefore exhibit the highest access level; the keys of disposal firm B, called "second level keys", are configured for opening any container supplied to disposal firm B by manufacturer A, and therefore exhibit an intermediate access level; the keys of end user C, called "third level keys", are configured for opening only the containers assigned by its disposal firm B thereto, and therefore exhibit the lowest access level.

Such access hierarchy to locks 12 takes place thanks to the possibility of dynamically configuring the locks themselves so that they become lock of manufacturer A (openable only by manufacturer A, and therefore with the lowest accessibility level), lock of disposal firm B (lock openable only by manufacturer A and by disposal firm B, therefore having an intermediate accessibility level), or lock of end user C (lock openable by manufacturer A, by disposal firm B and by user C, therefore having the highest accessibility). Microprocessor 14 of lock 12 is programmed so that it is capable of recognising the access level of key 30 interacting with lock 12 and, if this is the same as the current accessibility level of the lock, makes the comparison between the opening codes for allowing or not the opening of the container, whereas if it is higher than the current level of the lock, copies the opening codes of the key on the opening codes of the lock, thus enabling the opening of the container.

In other words, the keys themselves configure the locks, provided that the first are of a higher level than the latter.

In accordance with an embodiment, the first level key has the first level opening code 34 initialised with the code of a manufacturer A, whereas the codes of the other two levels are null. The second level key has the first level opening code initialised with the code of a manufacturer A, the second level opening code initialised with the code of a disposal firm B, and the third level opening code null. The third level key has the first level opening code initialised with the code of a manufacturer A, the second level opening code initialised with the code of a disposal firm B, and the third level opening code initialised with the code of an end user C.

Therefore, defining C1, C2 and C3 as the three opening codes of key 34-36 and S1, S2 and S3 as the opening codes of lock 18-20 for shortness, there can be the following combinations:

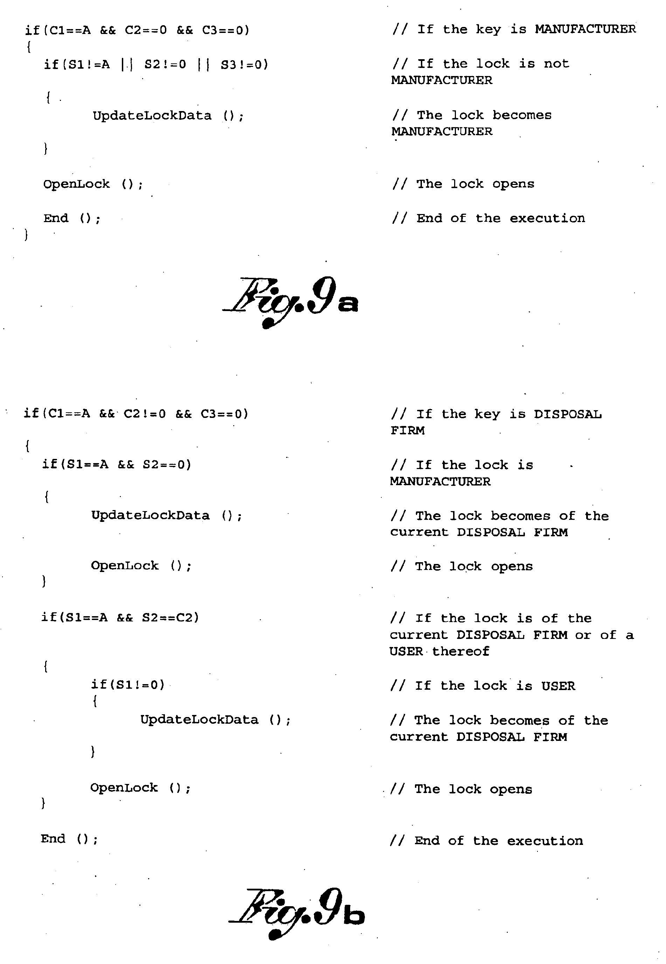

1) C1=Manufacturer A, C2=0, C3=0 (first level key); S1=S2=S3=Any (lock that needs complete initialisation): introducing the key into the lock initialises S1 as manufacturer A and all the lower levels can be cancelled. The lock configures as lock of manufacturer A and opens up. Figure 9a shows an example of a portion of the software code with which the lock microprocessor is programmed for carrying out this configuration procedure. The "UpdateLockData ()" routine overwrites the lock opening codes with the key opening codes.

2) C1=Manufacturer A, C2=Disposal firm B, C3=0 (second level key, or disposal firm's); S1=Manufacturer A, S2=0, S3=Any: introducing the key into the lock initialises S2 as disposal firm B and all the lower levels can be cancelled. The lock configures as lock of disposal firm B and opens up. The example of code of figure 9b allows carrying out this configuration procedure.

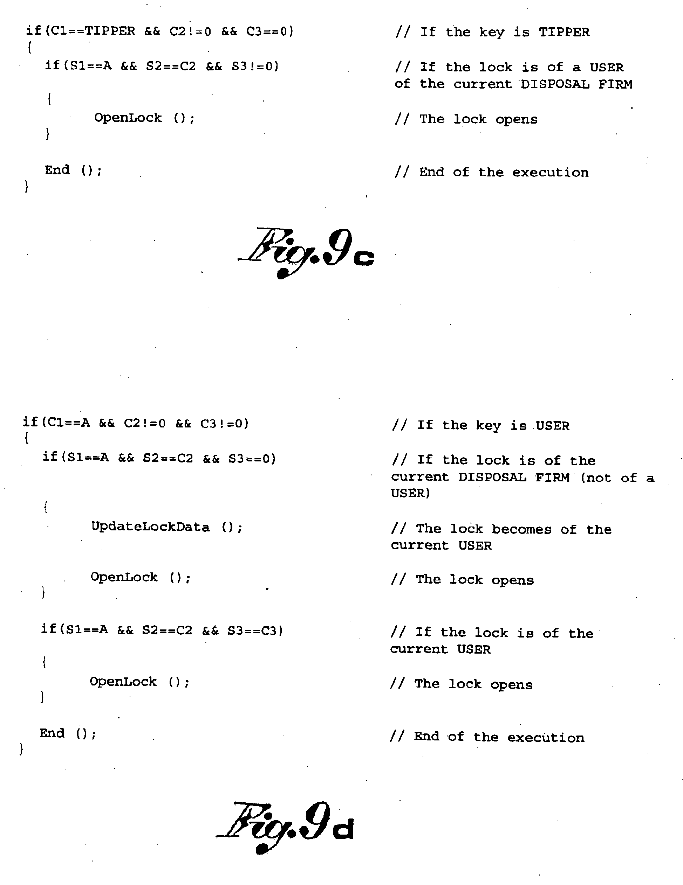

3) C1=Manufacturer A, C2=Disposal firm B, C3=User C (third level key, or user's); S1=Manufacturer A, S2=Disposal firm B, S3=0 (disposal firm key): introducing the key into the lock initialises level three of the lock as user C and the lock opens up (first part of the code portion of figure 9d).

4) C1=Manufacturer A, C2=Disposal firm B, C3=User C (third level key, or user's); S1=Manufacturer A, S2=Disposal firm B, S3=user C (disposal firm user key): introducing the key into the lock opens it up (second part of the code portion of figure 9d).

In all the other cases, no operation is carried out.

In accordance with an embodiment, key 30 communicates with lock 12 through a serial data transmission system.

As mentioned hereinbefore, the connection between key and lock is actuated after the key has authenticated against the container. In other words, the container must be sure that the key that wants to open it is authorised. A key is authorised to open a container if key and container come from a same manufacturer A. The authentication procedure is required because if the transmission were clear, it would be easily possible to read the code sent by a key and duplicate it.

In accordance with an embodiment of the method according to the invention, a key is authorised to open a lock if the secret code 37 of the key matches the secret code 21 of the lock.

In accordance with an embodiment, the key authentication is carried out with a challenge-response protocol. Based on such protocol, lock 12 reads serial number 33 and the opening codes 34-36 of the key, then sends a random number to the key. The latter calculates a message authentication code (MAC) of the random number, of its opening codes and of the secret code, and sends the calculated code to the lock. The lock calculates the MAC of the same parameters (knowing its secret code 21). If the two MAC match, the key is acknowledged, otherwise it is considered as invalid.

The safety of electronic locks is therefore based on the sharing of a secret code 21, 37 between locks and keys.

This code is never clearly transmitted. The secret code 37, 21 stored in the keys and in the locks is written during the production of the same by an automatic system that does not allow the code reading by the operators.

Manufacturer A and disposal firms B are provided with a program for changing and/or creating the keys. In the practice, such program, allows manufacturer A and disposal firms B to create as many keys as the respective clients. This program must know the secret code to be usable. In accordance with an embodiment of the method, this program is enabled by a hardware device that must be installed on the computer used for executing the same program (for example, a device with USB interface) and that contains a secret code.

Such device uses a mechanism similar to the challenge-response protocol used between lock and key, but uses a different secret code. Each disposal firm will have a device for enabling its key creation-changing program, unique and different from that of all the other disposal firms.

In any case, the key creation-changing program used by the disposal firms cannot change the first two levels of the keys.

It has been shown that with this technique, inferring the secret code based on the data accessible by the users would require very powerful computing systems and several years of processing.

Of course, it is possible to periodically change the secret code ensuring confidentiality for even long times.

In other words, intercepting the data exchanged between lock and key it is not possible to duplicate the key or simulate it because the secret code is not known and is never transmitted between key and lock.

Trying to guess the secret code is not feasible in "human" times, since the possible combinations are more than 16 billion billions (64 bits).

Still as regards to the safety of the management method proposed, it should be noted that a user cannot open the lock of another user after it has been configured. Similarly, a disposal firm cannot open the locks of other disposal firms after they have been configured.

The keys configure the locks after the locks have authenticated them and therefore it is not possible to change the lock codes with devices other than the certified keys.

In accordance with a preferred embodiment, the devices for managing the containers further comprise an operator terminal for the container loading and unloading operations and for the tipper management.

The operator terminal for the loading and unloading operations is a PDA capable of connecting to the disposal firm IT network and of reading the container transponders by an RFID reader. It is provided with the software for carrying out the container loading and unloading procedures and authentication procedures for enabled operators. In addition, it can print the receipt of the operations carried out to be delivered to the client.

The tipper is a motor vehicle capable of unloading the containers and locally disposing of the contents thereof. According to an embodiment, the operator terminal for the tipper is a PDA capable of carrying out the following operations:

- reading the key of the end user and using it for opening the containers to be disposed of (figure 9c);

- reading the RFID code of the container and storing it;

- printing the report of emptied containers;

- connecting to the disposal firm server and downloading the data of the operations carried out.

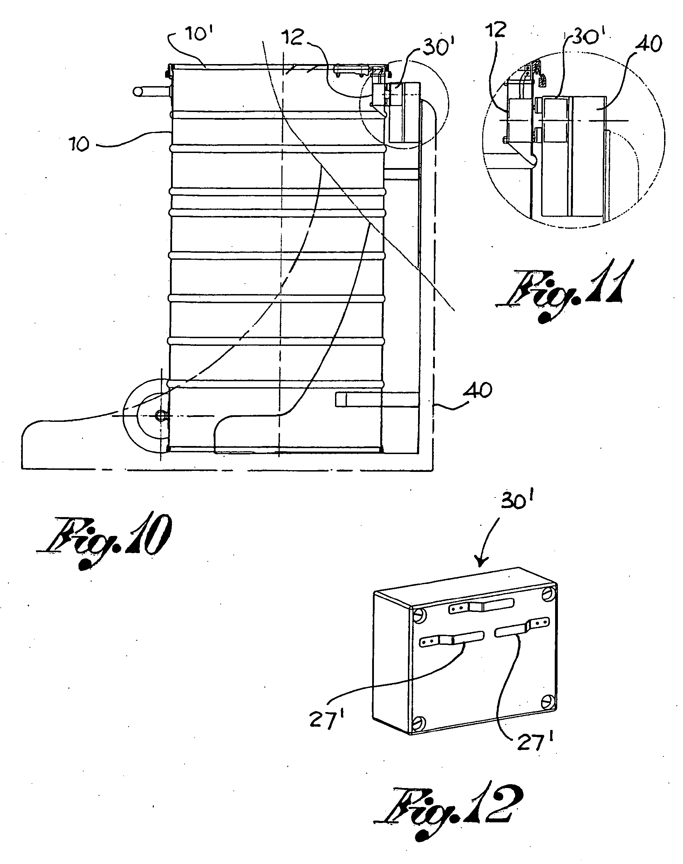

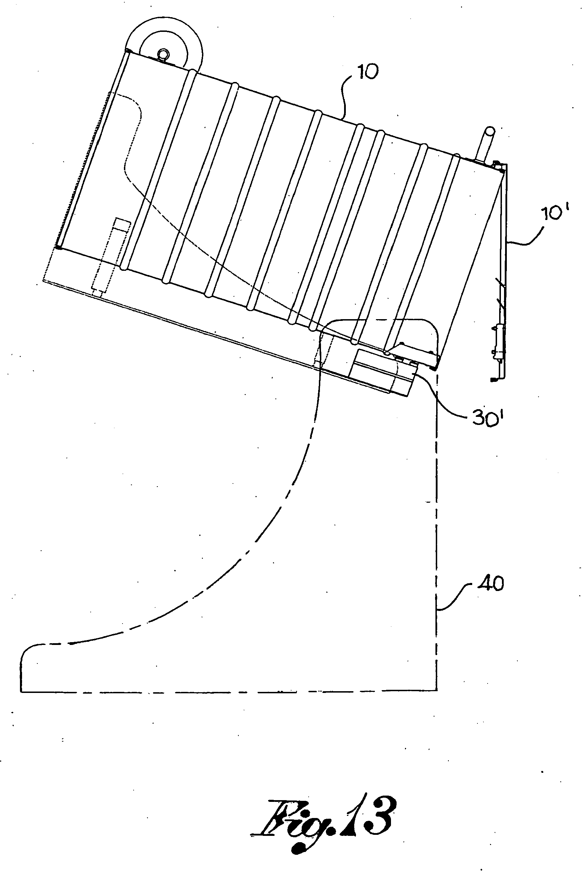

In accordance with an embodiment illustrated in figures 10-13, the tipper comprises a tipping device 40 capable of moving containers 10 up to tilting them for the emptying thereof. Advantageously, the tipping device 40 exhibits, at the level of lock 12 of the container, a second level key 30' which, when a container 10 is placed on such tipping device 40, opens lock 12 releasing lid 10' of container 10. Key 30' is provided with electrical spring contacts 27' suitable for realising the electrical contact with contact 26 of the locks.

Having described the devices intended for managing the containers, the way they are used by the operators of the chain for disposing of confidential documents shall now be better described.

Delivery of the containers to the disposal firms. Manufacturer A has a first level key, or manufacturer key, and N second level keys, or disposal firm keys, one for each disposal firm client thereof. Before delivering the containers to disposal firms B, it introduces its first level key into the locks of the containers configuring the manufacturer code as first level code. Then, it introduces the disposal firm key (recipient of the container) and programs the disposal firm code as second level code. In this way, each disposal firm receives containers already configured with their own second level code that cannot be changed anymore but by the manufacturer.

In addition, the manufacturer reads the code from the transponder using the operator terminal and associates the container to its disposal firm client (with date, time, operator, etc.).

Delivery of the containers to the end users. The disposal firm has a second level key and as many third level keys as its end clients. Before delivering a container, the disposal firm reads the code from the transponder using the operator terminal and associates the container to the client (with date, time, operator, etc.). Then, it introduces the client key and programs the client code as third level code. If it is not carried out by the disposal firm, this last operation can also be carried out upon the first opening carried out by the client.

Collection of the containers from the end users. When the disposal firm collects the container it can open it with its second level key and at the same time it clears the client code. Moreover, it can read and store the container collection with the PDA.

The operations are concurrent if the container is emptied by a tooled lorry (tipper).

Collection of the containers from the disposal firms. When the manufacturer collects a container from a disposal firm, it can open it with its key and at the same time it clears the disposal firm code. Moreover, it can read and store the container collection with the PDA.

Thanks to the method and to the devices described, the manufacturer has a sufficiently wide range of combinations available (some tenths thousands) to meet all of its clients, guaranteeing a series of dedicated and exclusive combinations to each of them.

The disposal firm B, upon the delivery of the containers to client C, has the possibility of customising with a code (alphanumerical combinations) the containers themselves to the client (since up to that moment they are anonymous it is possible to deliver any amount to any recipient, according to the request, upon the delivery itself) storing the number of containers left on site.

The manager of the end user C always has the possibility of opening all of their containers available at the time with a simple third level electronic key.

The disposal firm driver collects the full containers and returns them to the premises, without having to record anything but any administrative/tax documents.

After unloading the lorry, the containers are ready to be sent to the tipper for the subsequent emptying.

Electronically, it is possible to detect and download the data required for billing to the computer, besides the historical information of each container associated to a client from the creation of the third level key up to the emptying of the container before an electrical contact (also 220v) triggers the lock to open the door.

Another advantageous aspect of the invention consists in having considerably simplified the "acknowledgement" and the "traceability" of the container upon the delivery and/or collection at the client's. Another advantageous aspect of the invention consists in having considerably simplified the "acknowledgement" and the "traceability" of the container upon the delivery and/or collection at the client's.

In brief, it is possible to electronically record the path of a predetermined container from the moment it leaves its seat to its return (who brought it, when, to whom, for how long, who collected it, when, when it was emptied, etc.) and then manage the billing information and the master file with dedicated software, avoiding paper documents.

## Claims

1. A method for managing containers (10) of confidential data intended to be destroyed, wherein the management of said containers concerns at least a first supplier subject (A, B) and at least a second subject (B, C) client of the first one, comprising the steps of:
- associating an electronic lock (12) to each container (10);
- providing the first subject with at least a first level electronic key and the second subject with a second level electronic key for said electronic lock, wherein
- each electronic lock and each electronic key comprise at least a first memory portion in which a first level access code can be stored and a second memory portion in which a second level access code can be stored,
- the first level key has a first subject code stored in the first memory portion and a null code stored in the second memory portion,
- the second level key has a first subject code stored in the first memory portion and a second subject code stored in the second memory portion,
the method comprising the steps of:
- delivering a container from the first subject to the second subject by configuring an electronic lock as a second level electronic lock, wherein a second level key is inserted in said lock and the second level access code of the key is written in the second memory portion of the lock;
- use of the container by the second subject, wherein the second level key of said second subject opens only a second level lock having the same first and second access codes; and
- collecting a container from the second subject to the first subject, wherein the first level electronic key opens an electronic lock having the same first level code and any second level code, and wherein the null second level access code is written in the second memory portion of the lock.

2. A method according to claim 1, wherein the container management involves a first subject (A) manufacturer of the containers, at least a second disposal firm subject (B) that receives the containers from the manufacturer, and at least a third end user subject that receives the empty containers from the disposal firm (B) and delivers them back full to said disposal firm for the emptying thereof, each electronic lock and each electronic key giving a first, a second and a third memory portion in which a first, a second and a third level access code can be stored, respectively.

3. A method according to claim 1 or 2, wherein the first supplier subject (A, B) is capable of creating and/or changing the electronic keys (30) to be delivered to every second client subject (B, C).

4. A method according to claim 3, wherein the electronic keys exhibit different access levels to the locks according to the subject they are assigned to, and wherein the locks are configurable with different accessibility levels so that the locks of the containers of the supplier subjects cannot be opened by the keys of the client subjects.

5. A method according to claim 4, wherein the locks are dynamically configurable to taking up an accessibility level using the key of a higher level as a configuration means.

6. A method according to any one of the previous claims, wherein when a key connects to a lock, a key authentication procedure is envisaged for checking that said key is authorised to open the lock.

7. A method according to claim 6 7, wherein said authentication procedure is based on the check of the identity between a secret code associated to the lock and a secret code associated to the key.

8. A container for the disposal of confidential documents, comprising an electronic lock (12) comprising an electronic microprocessor board (14) with permanent memory (16) having at least a first and a second memory portions wherein there are stored at least a first and a second level access codes (18, 19, 20), wherein the microprocessor is programmed for making the comparison between its own opening codes and the corresponding first and second level access codes of a key inserted in the lock for allowing or not the opening of the container, wherein, if the first level access codes are the same,
- if the second level access code of the key is null, the microprocessor writes said null code into the second memory portion of the lock and opens the lock;
- if the second level access codes of the key and of the lock are not null, performs the comparison between said codes and open the lock only if they match;
- if the second level access code of the lock is null and the second level access code of the key is not null, the microprocessor writes the latter in the second memory portion of the lock and opens the lock.

9. A container according to claim 8, further comprising a read-only RFID transponder (22) with unique identification code (23).

10. A tipper comprising a tipping device (40) suitable for moving containers (10) of confidential documents according to claim 8 or 9 up to tipping them for the emptying thereof, comprising
- a first level electronic key for opening the lock of the container to be emptied, the first level electronic key having a first subject code as first level access code stored in a first memory portion and a null code as second level access code stored in a second memory portion, so that, if the first level access code of the container lock matches the first level access code of the electronic key, the key opens the lock and the null code of the key is written into the second memory portion of the lock;
- means suitable for reading the RFID code of the container and storing it, printing the report of the emptied containers, and connecting to the tipper server for downloading the data of the operations carried out.

## Patentansprüche

1. Verfahren zum Verwalten von Behältern (10) mit vertraulichem Datenmaterial, das vernichtet werden sollen, wobei das Verwalten der Behälter wenigstens einen ersten Lieferanten-Subjekt (A, B) und wenigstens ein zweites Subjekt (B, C), der Kunde des ersten ist, betrifft, folgende Schritte umfassend:
- Zuordnen eines elektronischen Schlosses (12) zu jedem Behälter (10),
- Bereitstellen wenigstens eines elektronischen Schlüssels eines ersten Niveaus für das erste Subjekt und eines elektronischen Schlüssels eines zweiten Niveaus für das elektronische Schloss für das zweite Subjekt, wobei
- jedes elektronische Schloss und jeder elektronische Schlüssel wenigstens einen ersten Speicherabschnitt, in dem ein Zugangscode eines ersten Niveaus gespeichert werden kann, und einen zweiten Speicherabschnitt, in dem ein Zugangscode eines zweiten Niveaus gespeichert werden kann, umfassen,
- der Schlüssel eines ersten Niveaus einen ersten Subjekt-Code, der in dem ersten Speicherabschnitt gespeichert ist, und einen Nullcode, der in dem zweiten Speicherabschnitt gespeichert ist, aufweist,
- der Schlüssel eines zweiten Niveaus einen ersten Subjekt-Code, der in dem ersten Speicherabschnitt gespeichert ist, und einen zweiten Subjekt-Code, der in dem zweiten Speicherabschnitt gespeichert ist, aufweist, wobei das Verfahren folgende Schritte umfasst:
- Ausliefern eines Behälters von dem ersten Subjekt an das zweite Subjekt durch Konfigurieren eines elektronischen Schlosses als ein elektronisches Schloss zweiten Niveaus, wobei ein Schlüssel zweiten Niveaus in das Schloss eingeführt wird und der Zugangscode eines zweiten Niveaus des Schlüssels in den zweiten Speicherabschnitt des Schlosses geschrieben wird,
- Verwenden des Behälters durch das zweite Subjekt, wobei der Schlüssel zweiten Niveaus des zweiten Subjekts nur ein Schloss zweiten Niveaus, das die gleichen ersten und zweiten Zugangscodes aufweist, öffnet, und
- Abholen eines Behälters von dem zweiten Subjekt und liefern an das erste Subjekt, wobei der elektronische Schlüssel ersten Niveaus ein elektronisches Schloss öffnet, das den gleichen Code ersten Niveaus und irgenden einen Code zweiten Niveaus aufweist, und wobei der Nullzugangscode zweiten Niveaus in den zweiten Speicherabschnitt des Schlosses geschrieben wird.

2. Verfahren gemäß Anspruch 1, wobei die Behälterverwaltung ein erstes Subjekt (A), Hersteller der Behälter, wenigstens ein zweites Vernichtungsfirma-Subjekt (B), das die Behälter von dem Hersteller erhält, und wenigstens ein drittes Endverbraucher-Subjekt, das die leeren Behälter von der Vernichtungsfirma (B) erhält und diese voll zurück an die Vernichtungsfirma zum Entleeren derselben liefert, wobei jedes elektronische Schloss und jeder elektronische Schlüssel einen ersten, einen zweiten und einen dritten Speicherabschnitt aufweist, in dem jeweils ein erster Zugangscode, ein zweiter Zugangscode und ein dritter Zugangscode gespeichert werden kann.

3. Verfahren gemäß Anspruch 1 oder 2, wobei das erste Lieferanten-Subjekt (A, B) die elektronischen Schlüssel (30), die an jedes zweite Kunden-Subjekt (B, C) ausgeliefert werden, erzeugen und/oder abändern kann.

4. Verfahren gemäß Anspruch 3, wobei die elektronischen Schlüssel unterschiedliche Zugangsniveaus zu den Schlössern gemäß dem Subjekt, dem diese zugewiesen sind, aufweisen, und wobei die Schlösser mit unterschiedlichen Zugangsniveaus konfigurierbar sind, so dass die Schlösser der Behälter der Lieferanten-Subjekte nicht durch die Schlüssel der Kunden-Subjekte geöffnet werden können.

5. Verfahren gemäß Anspruch 4, wobei die Schlösser dynamisch konfigurierbar sind, um ein Zugangsniveau durch Verwendung des Schlüssels eines höheren Niveaus als die Konfigurationsmittel anzunehmen.

6. Verfahren gemäß irgend einem der vorangehenden Ansprüche, wobei, wenn ein Schlüssel mit einem Schloss verbunden wird, ein Schlüsselauthentifizierungsschritt zum Bestätigen, dass der Schlüssel berechtigt ist, das Schloss zu öffnen, vorgesehen ist.

7. Verfahren gemäß Anspruch 6, wobei der Authentifizierungsschritt auf der Identitätsüberprüfung zwischen einem geheimen Code, der dem Schloss zugehört, und einem geheimen Code, der dem Schlüssel zugehört, basiert.

8. Behälter zur Vernichtung von geheimen Dokumenten umfassend ein elektronisches Schloss (12), das eine elektronische Mikroprozessorplattine (14) mit einem Permanentspeicher (16) aufweist, der wenigstens einen ersten und einen zweiten Speicherabschnitt umfasst, wobei in diesen wenigstens ein erster und ein zweiter Zugangscode (18, 19, 20) gespeichert sind, wobei der Mikroprozessor zum Ausführen eines Vergleichs zwischen seinen eigenen Öffnungscodes und den entsprechenden ersten und zweiten Zugangscodes eines Schlüssels programmiert ist, der in das Schloss zum Erlauben oder Versagen des Öffnens des Behälters eingeführt wird, wobei, wenn die ersten Zugangscodes übereinstimmen, und
- wenn der zweite Zugangscode des Schlüssels null ist, der Mikroprozessor den Nullcode in den zweiten Speicherabschnitt des Schlosses schreibt und das Schloss öffnet,
- wenn die zweiten Zugangscodes des Schlüssels und des Schlosses nicht null sind, der Vergleich zwischen den Codes ausgeführt wird und das Schloss, nur dann wenn sie übereinstimmen, geöffnet wird,
- wenn der zweite Zugangscode des Schlosses null ist und der zweite Zugangscode des Schlüssels nicht null ist, der Mikroprozessor den letzteren in den zweiten Speicherabschnitt des Schlosses schreibt und das Schloss öffnet.

9. Behälter gemäß Anspruch 8, ferner umfassend einen schreibgeschützten RFID-Transponder (22) mit einem einzigartigen Identifikationscode (23).

10. Kippfahrzeug umfassend eine Kippvorrichtung (40), die zum Bewegen der Behälter (10) mit vertraulichen Dokumenten gemäß Anspruch 8 oder 9 bis zum Kippen derselben zum Entleeren geeignet ist, umfassend
- einen elektronischen Schlüssel ersten Niveaus zum Öffnen des Schlosses des zu entleerenden Behälters, wobei der elektronische Schlüssel ersten Subjekt-Niveaus einen ersten Subjekt-Code als Zugangscode ersten Niveaus, der in einem ersten Speicherabschnitt gespeichert ist, und einen Nullcode als Zugangscode zweiten Niveaus, der in einem zweiten Speicherabschnitt gespeichert ist, aufweist, so dass, wenn der Zugangscode ersten Niveaus des Behälterschlosses mit dem Zugangscode ersten Niveaus des elektronischen Schlüssels übereinstimmt, der Schlüssel das Schloss öffnet und den Nullcode des Schlüssels in den zweiten Speicherabschnitt des Schlosses schreibt,
- Mittel, die zum Lesen des RFID-Codes des Behälters und Speichern desselben, zum Ausdrucken des Berichtes der entleerten Behälter und zum Verbinden mit dem Kippfahrzeugserver zum Herunterladen der Daten der ausgeführten Arbeitsschritte geeignet sind.

## Revendications

1. Procédé de gestion de récipients (10) de données confidentielles destinées à être détruites, dans lequel la gestion desdits récipients concerne au moins un premier sujet fournisseur (A, B) et au moins un deuxième sujet (B, C) client du premier, comprenant les étapes consistant à :
- associer un verrou électronique (12) à chaque récipient (10) ;
- doter le premier sujet d'au moins une clé électronique de premier niveau et le deuxième sujet d'une clé électronique de deuxième niveau pour ledit verrou électronique, dans lequel :
- chaque verrou électronique et chaque clé électronique comprennent au moins une première partie de mémoire, dans laquelle un code d'accès de premier niveau peut être stocké et une deuxième partie de mémoire, dans laquelle un code d'accès de deuxième niveau peut être stocké,
- la clé de premier niveau a un code de premier sujet stocké dans la première partie de mémoire et un code nul stocké dans la deuxième partie de mémoire,
- la clé de deuxième niveau a un code de premier sujet stocké dans la première partie de mémoire et un code de deuxième sujet stocké dans la deuxième partie de mémoire, le procédé comprenant les étapes consistant à :
- délivrer un récipient du premier sujet au deuxième sujet en configurant un verrou électronique comme verrou électronique de deuxième niveau, dans lequel une clé de deuxième niveau est insérée dans ledit verrou et le code d'accès de deuxième niveau de la clé est inscrit dans la deuxième partie de mémoire du verrou ;
- utiliser le récipient par le deuxième sujet, dans lequel la clé de deuxième niveau dudit deuxième sujet ouvre uniquement un verrou de deuxième niveau ayant les mêmes premier et deuxième codes d'accès ; et
- recueillir un récipient du deuxième sujet au premier sujet, dans lequel la clé électronique de premier niveau ouvre un verrou électronique ayant le même code de premier niveau et n'importe quel code de deuxième niveau et dans lequel le code d'accès de deuxième niveau nul est inscrit dans la deuxième partie de mémoire du verrou.

2. Procédé selon la revendication 1, dans lequel la gestion des récipients implique un premier sujet (A) fabriquant des récipients, au moins un deuxième sujet qui est une société de destruction (B), qui reçoit les récipients des fabricants, et au moins un troisième sujet utilisateur final qui reçoit les récipients vides de la société de destruction (B) et les renvoie pleins à la société de destruction pour les vider, chaque verrou électronique et chaque clé électronique donnant une première, une deuxième et une troisième partie de mémoire, dans lesquelles un code d'accès de premier, deuxième et troisième niveaux peut être stocké, respectivement.

3. Procédé selon la revendication 1 ou 2, dans lequel le premier sujet fournisseur (A, B) est capable de créer et/ou de changer les clés électroniques (30) à délivrer à chaque deuxième sujet client (B, C).

4. Procédé selon la revendication 3, dans lequel les clés électroniques présentent différents niveaux d'accès aux verrous selon le sujet auquel elles sont attribuées, et dans lequel les verrous peuvent être configurés avec différents niveaux d'accessibilité afin que les verrous des récipients des sujets fournisseurs ne puissent être ouverts par les clés des sujets clients.

5. Procédé selon la revendication 4, dans lequel les verrous peuvent être configurés de manière dynamique pour adopter un niveau d'accessibilité en utilisant la clé d'un niveau supérieur comme moyen de configuration.

6. Procédé selon l'une quelconque des revendications précédentes, dans lequel, lorsqu'une clé se raccorde à un verrou, une procédure d'authentification de clé est envisagée pour vérifier que ladite clé est autorisée à ouvrir le verrou.

7. Procédé selon la revendication 6, dans lequel ladite procédure d'authentification est basée sur le contrôle de l'identité entre un code secret associé au verrou et un code secret associé à la clé.

8. Récipient pour la décharge de documents confidentiels, comprenant un verrou électronique (12) comprenant une carte électronique à microprocesseur (14) avec une mémoire permanente (16) ayant au moins une première et une deuxième parties de mémoire, dans lesquelles sont stockées au moins des codes d'accès de premier et deuxième niveaux (18, 19, 20), dans lequel le microprocesseur est programmé pour effectuer la comparaison entre ses propres codes d'ouverture et les codes d'accès de premier et deuxième niveaux correspondants d'une clé insérée dans le verrou pour permettre ou non l'ouverture du récipient, dans lequel, si les codes d'accès de premier niveau sont les mêmes,
- si le code d'accès de deuxième niveau de la clé est nul, le microprocesseur inscrit ledit code nul dans la deuxième partie de mémoire du verrou et ouvre le verrou ;
- si les codes d'accès de deuxième niveau de la clé et du verrou ne sont pas nuls, il effectue la comparaison entre lesdits codes et n'ouvre le verrou que s'ils correspondent ;
- si le code d'accès de deuxième niveau du verrou est nul et que le code d'accès de deuxième niveau de la clé n'est pas nul, le microprocesseur inscrit ce dernier dans la deuxième partie de mémoire du verrou et ouvre le verrou.

9. Récipient selon la revendication 8, comprenant en outre un répondeur RFID à lecture seule (22) avec un code d'identification unique (23).

10. Dispositif de basculement comprenant un dispositif basculant (40) approprié pour déplacer des récipients (10) de documents confidentiels selon la revendication 8 ou 9 jusqu'à les faire basculer pour les vider, comprenant :
- une clé électronique de premier niveau pour ouvrir le verrou du récipient à vider, la clé électronique de premier niveau ayant un code de premier sujet comme code d'accès de premier niveau stocké dans une première partie de mémoire et un code nul comme code d'accès de deuxième niveau stocké dans une deuxième partie de mémoire, de sorte que, si le code d'accès de premier niveau du verrou du récipient correspond au code d'accès de premier niveau de la clé électronique, la clé ouvre le verrou et le code nul de la clé est inscrit dans la deuxième partie de mémoire du verrou ;
- des moyens appropriés pour lire le code RFID du récipient et le stocker, imprimer le rapport des récipients vidés et le raccorder au serveur du dispositif de basculement pour télécharger les données des opérations effectuées.
